# EUROPÄISCHE PATENTSCHRIFT

(11) **EP 3 126 762 B1**
(45) Veröffentlichungstag und Bekanntmachung des Hinweises auf die Patenterteilung: **15.08.2018**
(21) Anmeldenummer: 15712941.2
(22) Anmeldetag: 31.03.2015
(51) Int. Cl.: F25D 13/04, F03G 7/06, F25D 17/04, F25D 17/06

(54) **GERÄT, INSBESONDERE HAUSHALTSGERÄT, UND VERFAHREN ZUM BETREIBEN EINES GERÄTES**
DEVICE, IN PARTICULAR HOUSEHOLD APPLIANCE AND METHOD FOR OPERATING A DEVICE
APPAREIL, EN PARTICULIER APPAREIL MÉNAGER ET PROCÉDÉ POUR LE FAIRE FONCTIONNER

(30) Priorität: 01.04.2014 DE 102014206134
(43) Veröffentlichungstag der Anmeldung: 08.02.2017
(73) Patentinhaber: BSH Hausgeräte GmbH, 81739 München (DE); Actuator Solutions GmbH, 91710 Gunzenhausen (DE)
(72) Erfinder: ALACQUA, Stefano, I-200200 Lainate (MI) (IT); BUTERA, Francesco, I-20020 Lainate (MI) (IT); HÄRLEN, Jochen, 89551 Königsbronn (DE); JOKSCH, Harald, 89269 Vöhringen (DE); WINNER, Sebastian, 58644 Iserlohn (DE)
(86) Internationale Anmeldenummer: PCT/EP2015/057010
(87) Internationale Veröffentlichungsnummer: WO 2015/150377

(56) Entgegenhaltungen:
- EP-A1- 1 241 351
- EP-A1- 1 546 554
- EP-A1- 1 640 757
- WO-A1-91/15724
- WO-A1-2014/087312
- WO-A2-2014/091399
- WO-A2-2014/162234

## Beschreibung

Die Erfindung betrifft ein Gerät, insbesondere ein Haushaltsgerät, und ein Verfahren zum Betreiben eines Gerätes. Das Gerät umfasst ein erstes Bauteil, ein relativ zum ersten Bauteil bewegliches zweites Bauteil und eine Verstellvorrichtung, die eingerichtet ist, das erste Bauteil relativ zum zweiten Bauteil zwischen einer ersten Stellung und einer zweiten Stellung hin- und her zu bewegen.

Ein Beispiel eines solchen Gerätes ist ein Haushaltskältegerät, welches eine bezüglich einer Schwenkachse schwenkbare Klappe aufweist, die in einer ersten Stellung eine Öffnung verschließt und diese in einer zweiten Stellung öffnet und mittels einer Verstellvorrichtung, welche z.B. einen Synchron- oder Schrittmotor, aufweist, zwischen den beiden Stellungen hin und her geschwenkt werden kann.

Die EP 1 546 554 B1 offenbart einen Formgedächtnis-Legierungsmotor, der einen Körper, der zwischen einer ersten und einer zweiten Position hin und her verstellbar ist, zwei Drähte aus einer Formgedächtnislegierung, eine vorgespannte Feder und einen Sensor aufweist. Mit dem Motor wird ein Stellkörper zwischen zwei verschiedenen Stellungen hin und her bewegt. Beim Verstellen des Körpers zwischen seiner ersten Position, die einer ersten Stellung des Stellkörpers zugeordnet ist, in seine zweite Position, die der zweiten Stellung des Stellkörpers zugeordnet ist, wird einer der Drähte erwärmt, wodurch sich dessen Länge verkürzt und dadurch der Körper über eine instabile Position in die zweite Position verstellt wird. Beim Verstellen des Körpers zwischen seiner zweiten Position in seine erste Position wird der andere Draht erwärmt, wodurch sich dessen Länge verkürzt und dadurch der Körper in die erste Position über dieselbe instabile Position verstellt wird. Die vorgespannte Feder hält den Körper in den beiden Positionen auch bei abgekühlten Drähten und der Sensor erkennt, wenn der Körper eine der Positionen einnimmt.

Die EP 1 241 351 A1 offenbart ein erstes Bauteil, ein relativ zum ersten Bauteil bewegliches zweites Bauteil und einen Aktuator zum Hin- und Herbewegen des zweiten Bauteils relativ zum ersten Bauteil zwischen einer ersten Stellung und einer zweiten Stellungen. Dem Aktuator ist ein bi-stabiler Mechanismus zugeordnet, der eine Kontur in Form eines invertierten Y und zwei instabile Zustände umfasst.

Aufgabe der vorliegenden Erfindung ist es, ein verbessertes Gerät anzugeben, welches ein erstes Bauteil, ein relativ zum ersten Bauteil bewegliches zweites Bauteil und eine Verstellvorrichtung aufweist, die eingerichtet ist, das erste Bauteil relativ zum zweiten Bauteil zwischen einer ersten Stellung und einer zweiten Stellung hin- und her zu bewegen.

Die Aufgabe der Erfindung wird gelöst durch ein Gerät gemäß dem Anspruch 1.

Das erfindungsgemäße Gerät umfasst demnach das erste Bauteil und das zweite Bauteil, das mittels der Verstellvorrichtung zwischen den beiden Stellungen hin und her bewegbar ist. Die Verstellvorrichtung umfasst den Aktuator, welcher gesteuert durch die Steuervorrichtung das zweite Bauteil von ihrer ersten Stellung in ihre zweite Stellung und darüber hinaus zu bewegen vermag. Um das zweite Bauteil in ihren beiden Stellungen zu halten, umfasst die Verstellvorrichtung den bi-stabilen Mechanismus mit der vorgespannten Feder. Der bi-stabile Mechanismus ist eingerichtet, einen ersten stabilen Zustand, einen zweiten stabilen Zustand, einen ersten instabilen Zustand und einen zweiten instabilen Zustand einzunehmen, wobei der erste stabile Zustand der ersten Stellung und der zweite stabile Zustand der zweiten Stellung des zweiten Bauteils zugeordnet ist, sodass der bi-stabile Mechanismus in seinem ersten stabilen Zustand das zweite Bauteil in seiner ersten Stellung und im zweiten stabilen Zustand in seiner zweiten Stellung hält. Somit kann mittels des Aktuators das zweite Bauteil von seiner ersten Stellung derart weit über die zweiten Stellung bewegen, sodass der bi-stabile Mechanismus den ersten instabilen Zustand erreicht, von dem der bi-stabile Mechanismus das zweite Bauteil in seine zweite Stellung bewegen kann, sodass der bi-stabile Mechanismus seinen zweiten stabilen Zustand einnimmt. Um das zweite Bauteil von seiner zweiten Stellung in die erste Stellung zu bewegen, ist es lediglich nötig, mittels des Aktuators das zweite Bauteil von seiner zweiten Stellung derart weit über die zweite Stellung zu bewegen, sodass der bi-stabile Mechanismus den zweiten instabilen Zustand erreicht, von dem der bi-stabile Mechanismus das zweite Bauteil in seine erste Stellung bewegen kann, sodass der bi-stabile Mechanismus seinen ersten stabilen Zustand einnimmt. Erfindungsgemäß umfasst das Gerät außerdem den mit dem bi-stabilen Mechanismus gekoppelten Sensor, welcher das erste Signal erzeugt, wenn das zweite Bauteil seine zweite Stellung einnimmt und ansonsten das zweite Signal erzeugt. Somit ist es möglich, aufgrund einer Auswertung auch des zeitlichen Verlaufs der von dem Sensor erzeugten Signale einen Rückschluss über den momentanen Zustand des bi-stabilen Mechanismus bzw. der momentanen Stellung des zweiten Bauteils zu erhalten. Es bedarf also lediglich eines einzigen Sensors, um diese Information zu erhalten.

Das erfindungsgemäße Gerät kann z.B. eine Öffnung aufweisen, welche mittels des zweiten Bauteils verschlossen ist, wenn sich das zweite Bauteil in seiner ersten Stellung befindet, und welche geöffnet ist, wenn sich das Bauteil in seiner zweiten Stellung befindet.

Das zweite Bauteil kann beispielsweise eine Klappe sein, die schwenkbar bezüglich einer Schwenkachse zwischen den beiden Stellungen hin und her geschwenkt werden kann.

Ist z.B. das erfindungsgemäße Gerät als eine Kühl-Gefrierkombination mit einem kühlbaren Innenraum und einem Gefrierraum ausgeführt, dann kann diese Öffnung den kühlbaren Innenraum mit dem Gefrierraum verbinden, sodass gekühlte Luft vom Gefrierraum zum kühlbaren Innenraum strömen kann, wenn sich die Klappe in ihrer zweiten Stellung befindet, also geöffnet ist. Dadurch kann z.B. der Aufwand für einen Kühlmittelkreislauf, der zum Kühlen des Gefrierraums und des kühlbaren Innenraums vorgesehen ist, reduziert werden. Die Klappe kann dann z.B. von einer Steuervorrichtung der Kühl-Gefrierkombination angesteuert werden, so dass der kühlbare Innenraum über den Gefrierraum gekühlt wird und zumindest in etwa eine Soll-Temperatur aufweist.

Als Aktuator kann z.B. ein Motor, z.B. ein Synchronmotor oder ein Schrittmotor verwendet werden. Der Aktuator kann auch als ein mit dem zweiten Bauteil gekoppelter Draht aus einer Formgedächtnislegierung ausgebildet sein, welcher sich bei Erwärmung verkürzt und dadurch das zweite Bauteil von seiner ersten Stellung in ihre zweite Stellung und darüber hinaus zu bewegen vermag. Die Verstellvorrichtung kann dann eine mit der Steuervorrichtung verbundene elektrische Energiequelle umfassen, mittels derer der Draht aus einer Formgedächtnislegierung mit elektrischer Energie beaufschlagbar ist, um erwärmt zu werden. Formgedächtnislegierungen werden auch als "Memorymetalle" bezeichnet. Der Draht aus einer Formgedächtnislegierung ist derart beschaffen, dass er sich bei Erwärmung zusammen zieht, also seine Länge verkürzt, und dadurch das zweite Bauteil von seiner ersten Stellung in seine zweite Stellung bewegt. Insbesondere ist der Draht aus einer Formgedächtnislegierung derart beschaffen, dass er sich in seinem abgekühlten Zustand durch Beaufschlagen mit einer Kraft, die z.B. von der vorgespannten Feder stammt, wieder in seine ursprüngliche Länge ziehen lässt. Um z.B. das zweite Bauteil von seiner ersten Stellung in die zweite Stellung zu bewegen, wird insbesondere aufgrund dieser Ausführungsform der Draht aus einer Formgedächtnislegierung erwärmt, z.B. durch Einschalten der elektrischen Energiequelle, sodass dieser sich verkürzt. Dadurch wird das zweite Bauteil über seine zweite Stellung hinaus bewegt und der bi-stabile Mechanismus befindet sich in seinem ersten instabilen Zustand. Daraufhin ist es lediglich nötig, den Draht aus einer Formgedächtnislegierung abkühlen zu lassen, indem z.B. die elektrische Energiequelle ausgeschaltet wird. Dadurch kann der Draht aus einer Formgedächtnislegierung wieder gedehnt werden, weshalb es dem bi-stabilen Mechanismus mittels der vorgespannten Feder ermöglicht ist, das zweite Bauteil in seine zweite Stellung zu bewegen und dort zu halten, solange der Draht aus einer Formgedächtnislegierung nicht erwärmt wird. Um z.B. das zweite Bauteil von seiner zweiten Stellung in die erste Stellung zu bewegen, wird insbesondere aufgrund dieser Ausführungsform der Draht aus einer Formgedächtnislegierung erwärmt, z.B. durch Einschalten der elektrischen Energiequelle, sodass dieser sich verkürzt. Dadurch wird das zweite Bauteil über seine zweite Stellung hinaus bewegt und der bi-stabile Mechanismus befindet sich in seinem zweiten instabilen Zustand. Daraufhin ist es lediglich nötig, den Draht aus einer Formgedächtnislegierung abkühlen zu lassen, indem z.B. die elektrische Energiequelle ausgeschaltet wird. Dadurch kann der Draht aus einer Formgedächtnislegierung wieder gedehnt werden, weshalb es dem bi-stabilen Mechanismus mittels der vorgespannten Feder ermöglicht ist, das zweite Bauteil in seine erste Stellung zu bewegen und dort zu halten, solange der Draht aus einer Formgedächtnislegierung nicht erwärmt wird.

Der Draht aus einer Formgedächtnislegierung weist insbesondere zwei Enden auf, mit denen der Draht aus einer Formgedächtnislegierung beabstandet von der Schwenkachse an einem ortsfesten Bestandteil, z.B. dem ersten Bauteil, des Gerätes befestigt sein kann. Im Falle der schwenkbaren Klappe als zweites Bauteil kann der Draht aus einer Formgedächtnislegierung vorzugsweise zusätzlich beabstandet von der Schwenkachse an der Klappe mittels einer Befestigungsvorrichtung befestigt sein. Insbesondere verläuft die Verbindungslinie zwischen denjenigen Stellen, an denen die Enden des Drahts aus einer Formgedächtnislegierung am ortsfesten Bestandteil, z.B. dem zweiten Bauteil, des Gerätes befestigt sind, parallel zur Schwenkachse. Gemäß dieser Ausführungsform ist es z.B. möglich, dass die Befestigungsvorrichtung eine weg von der Schwenkachse gerichtete Nut aufweist, in der der Draht aus einer Formgedächtnislegierung geführt ist. Dadurch ist der Draht aus einer Formgedächtnislegierung längs dieser Nut beweglich, wodurch die Gefahr eines Reißens bei ungleichem Zusammenziehen des Drahtes aus einer Formgedächtnislegierung zumindest verringert wird.

Es kann auch vorgesehen sein, dass als Draufsicht gesehen, der Draht aus einer Formgedächtnislegierung an der Klappe zwischen seinen Enden mittels der Befestigungsvorrichtung, insbesondere mittig bezüglich seiner Enden, an der Klappe mittels der Befestigungsvorrichtung befestigt ist. Dadurch ergibt sich eine V-förmige Anordnung des Drahtes aus einer Formgedächtnislegierung, wodurch die Teilstrecken des Drahtes aus einer Formgedächtnislegierung, die sich von der Befestigungsvorrichtung bis zu den jeweiligen Enden erstrecken, gleich lang sind. Dadurch wird es ermöglicht, dass diese beiden Teilstrecken sich bei Erwärmung um dieselbe Länge zusammen ziehen, was sich wiederum positiv auf die Belastung

Die Klappe kann sich z.B. längs der Schwenkachse um eine Breite erstrecken. Vorzugsweise ist die Länge der Verbindungslinie zwischen denjenigen Stellen, an denen die Enden des Drahts aus einer Formgedächtnislegierung am ortsfesten Bestandteil des Haushaltsgerätes befestigt sind, größer oder gleich der Breite der Klappe. Insbesondere ist die Befestigungsvorrichtung mittig bezüglich der Breite der Klappe an der Klappe angeordnet. des Drahtes aus einer Formgedächtnislegierung auswirkt.

Die Befestigungsvorrichtung kann eine an der Klappe angeordnete Tasche mit einer von der Schwenkachse abgewandten Öffnung und ein innerhalb der Tasche geführtes federvorgespanntes Element, an dem der Draht aus einer Formgedächtnislegierung befestigt ist, wobei das federvorgespannte Element derart vorgespannt ist, dass es den Draht aus einer Formgedächtnislegierung von der Schwenkachse wegdrückt. Die Tasche ist vorzugsweise einstückig an der Klappe angeformt.

Vorzugsweise weist das federvorgespannte Element eine Nut auf, die sich von der Schwenkachse weggerichtet öffnet und in der der Draht aus einer Formgedächtnislegierung geführt ist. Dadurch ist der Draht aus einer Formgedächtnislegierung längs dieser Nut beweglich, wodurch die Gefahr eines Reißens bei ungleichem Zusammenziehen des Drahtes aus einer Formgedächtnislegierung zumindest verringert wird.

Die Steuervorrichtung des erfindungsgemäßen Gerätes ist derart ausgeführt, dass sie
- den Aktuator so lange ansteuert, bis der Sensor zunächst das erste Signal erzeugt und anschließend anfängt, das zweite Signal zu erzeugen, damit der Aktuator das zweite Bauteil von seiner ersten Stellung bis über die zweite Stellung hinaus bewegt, und
- nachdem der Sensor beginnt, das zweite Signale zu erzeugen, den Aktuator ausschaltet, sodass die vorgespannte Feder das zweite Bauteil in seine zweite Stellung bewegt.

Ein weiterer Aspekt der Erfindung betrifft demnach ein Verfahren zum Betreiben des erfindungsgemäßen Gerätes, aufweisend folgende Verfahrensschritte:
- Bewegen des zweiten Bauteils mittels des Aktuators von seiner ersten Stellung bis über die zweite Stellung hinaus so lange, bis der Sensor zunächst das erste Signal erzeugt und anschließend anfängt, das zweite Signal zu erzeugen, und
- nachdem der Sensor beginnt, das zweite Signal zu erzeugen, Ausschalten des Aktuators und mittels der vorgespannten Feder, Bewegen des zweiten Bauteils in seine zweite Stellung.

Befindet sich das zweite Bauteil in seiner ersten Stellung, dann befindet sich der bi-stable Mechanismus in seinem ersten Zustand, weshalb der Sensor das zweite Signal erzeugt. Um das zweite Bauteil in seinen zweiten Zustand zu bewegen, bewegt der Aktuator, im Falle des Drahtes aus einer Formgedächtnislegierung aufgrund eines Erwärmens desselben, das zweite Bauteil über die zweite Stellung hinaus, weshalb der Sensor während des Bewegens zunächst beginnt, das erste Signal zu erzeugen bis das zweite Bauteil so weit bewegt ist, dass der bi-stabile Mechanismus seinen ersten instabilen Zustand erreicht. Dies erkennt die Steuervorrichtung sobald der Sensor nicht mehr das erste Signale, dafür aber das zweite Signal erzeugt, woraufhin die Steuervorrichtung den Aktuator ausschalten kann, damit der bi-stabile Mechanismus das zweite Bauteil in die zweite Stellung bewegen kann. Im Falle des Drahtes aus einer Formgedächtnislegierung wird dieser ausgeschaltet, indem er sich abkühlen lassen kann. Dies erfolgt z.B. durch Ausschalten der elektrischen Energiequelle.

Um beispielsweise die bestimmungsgemäße Funktionsweise der Verstellvorrichtung zu überprüfen, kann, nachdem der Aktuator ausgeschaltet wurde, geschlossen werden, dass der bi-stabile Mechanismus seinen zweiten stabilen Zustand und somit das zweite Bauteil seine zweite Stellung eingenommen hat, wenn der Sensor wieder das erste Signal erzeugt.

Um das zweite Bauteil von seiner zweiten Stellung in die erste Stellung zu bewegen, kann Folgendes insbesondere gesteuert durch die Steuervorrichtung durchgeführt werden:
- Bewegen des zweiten Bauteils mittels des Aktuators von der zweiten Stellung über diese hinaus, bis der Sensor beginnt, das zweite Signal zu erzeugen, und
- nachdem der Sensor beginnt, das zweite Signal zu erzeugen, Ausschalten des Aktuators und mittels der vorgespannten Feder, Bewegen des zweiten Bauteils in seine erste Stellung.
Im Falle des Drahtes aus einer Formgedächtnislegierung wird das zweite Bauteil von seiner zweiten Stellung über diese hinaus durch Erwärmen des Drahtes aus einer Formgedächtnislegierung bewegt.

Um beispielsweise die bestimmungsgemäße Funktionsweise der Verstellvorrichtung zu überprüfen, kann, nachdem der Aktuator ausgeschaltet wurde, geschlossen werden, dass der bi-stabile Mechanismus seinen ersten stabilen Zustand und somit das zweite Bauteil seine erste Stellung eingenommen hat wenn der Sensor nach dem Ausschalten des Aktuators und während des Bewegens das erste Signale und anschließend das zweite Signal erzeugt.

Nach einer bevorzugten Variante des erfindungsgemäßen Gerätes und im Falle des als schwenkbare Klappe ausgeführten zweiten Bauteils umfasst der bi-stabile Mechanismus folgende Bestandteile:
- die vorgespannte Feder, die derart vorgespannt ist, dass sie die Klappe in ihre erste Stellung zu schwenken vermag,
- ein Bauelement mit einer Oberfläche, die zumindest in etwa rechtwinklig zur Schwenkachse ausgerichtet und in der eine nutförmig verlaufende herzförmige Kontur angeordnet ist, wobei das Bauelement Teil der Klappe oder mit dieser starr verbunden ist und somit das Bauelement und die herzförmige Kontur mit der Klappe mit schwenkt und der herzförmigen Kontur die beiden stabilen Zustände und die beiden instabilen Zustände zugeordnet sind, wobei das Bauelement eine Betätigungsvorrichtung aufweist, welches mit der Klappe mit schwenkt und den Sensor nur dann aktiviert, wenn die Klappe in ihre zweite Stellung geschwenkt ist, und
- ein in der herzförmigen Kontur eingreifender Stift, der derart mit der herzförmigen Kontur zusammenwirkt, sodass der Stift die Klappe in ihrer ersten Stellung hält, wenn der bi-stabile Mechanismus seinen ersten stabilen Zustand aufweist, und die Klappe in ihrer zweiten Stellung hält, wenn der bi-stabile Mechanismus seinen zweiten stabilen Zustand aufweist.

Nach dieser Variante des erfindungsgemäßen Gerätes umfasst demnach der bi-stabile Mechanismus das Bauelement, in der eine Nut eingebracht ist, die herzförmig verläuft. Dieses Bauelement ist beispielsweise Teil der Klappe, z.B. an dieser einstückig angeformt oder die herzförmige Kontur ist in einer rechtwinklig zur Schwenkachse ausgerichteten Oberfläche der Klappe angeordnet. Das Bauelement kann aber auch starr mit der Klappe verbunden sein. Die herzförmige Kontur schwenkt somit mit der Klappe mit. Mit der herzförmigen Kontur wirkt der Stift zusammen, indem er in die herzförmige Kontur eingreift und das Bauelement und somit die Klappe in den stabilen Zustanden hält. Des Weiteren umfasst das Bauelement die Betätigungsvorrichtung, welche mit dem Bauelement und somit mit der Klappe mit schwenkt. Die Betätigungsvorrichtung ist somit entsprechend der Stellung der Klappe und des Zustands des bi-stabilen Mechanismus ausgerichtet und kann dementsprechend mit dem Sensor zusammen wirken, dass dieser das erste Signal erzeugt, wenn die Klappe ihre zweite Stellung einnimmt, und ansonsten das zweite Signal. Handelt es sich z.B. bei dem Sensor um einen Magnetschalter, dann kann die Betätigungsvorrichtung als ein Magnet ausgeführt sein, welche z.B. in magnetischer Wirkverbindung mit dem Magnetsensor steht, also mit dem Magentsensor ausreichend magnetisch gekoppelt ist, wenn die Klappe derart weit geschwenkt ist, dass sie ihre zweite Stellung einnimmt. In den restlichen Stellungen ist der Magnet nicht mit dem Magnetsensor gekoppelt, wodurch dieser das zweite Signal erzeugt.

Der Sensor kann beispielsweise auch als ein mechanischer Schalter mit einem Betätigungselement ausgebildet sein. Der Schalter ist vorzugsweise ein Mikroschalter. Die Betätigungsvorrichtung kann dann als eine an dem Bauelement angeordnete Ausbuchtung, z.B. ein Nocken, ausgebildet sein, welche das Betätigungselement schließt, um den Schalter zu schließen, wenn die Klappe in ihrer zweiten Stellung geschwenkt ist.

Aufgrund des erfindungsgemäßen Gerätes ergibt sich ein bi-stabiler Mechanismus inklusive Positionsbestimmung.

Je nach Ausführungsform der Erfindung kann aufgrund des Sensors beim bi-stabilen Mechanismus die Arretierung von zwei Zuständen, d.h. der erste und der zweite stabile Zustand, inkl. Positionsbestimmung und Bestimmung des Überhubs, d.h. der beiden instabilen Zustände, erfolgen. Vorzugsweise umfasst der bi-stabile Mechanismus eine Herzkurve und ein in der Herzkurve laufendes Gegenstück vorzugsweise in Form des Stiftes (z.B. Metallpin). Dieses rastet durch die Bewegung eines Aktuators in eine der beiden Endpositionen einer Herzkurve ein. Gegebenfalls über die Betätigungsvorrichtung (z.B. Nocken, Magnet) am bi-stabilen Mechanismus wird z.B. ein Schalter (z.B. Mikroschalter) oder ein Schaltsensor (z.B. Magnetsensor, Lichtschranke, ...) betätigt. Damit kann einerseits der Überhub zum Abschalten des Aktuators bestimmt werden. Zusätzlich ist die Bestimmung der Aktuatorposition im nicht angesteuerten Zustand möglich. Das Signal kann beispielsweise von einer Elektronik zur elektrischen Ansteuerung eines Aktuators verwendet werden. Dadurch kann sich eine Integration von zwei Erkennungsmodi (Überhub und Aktuatorposition) in einem bi-stabilen Mechanismus durch nur einen Sensor ergeben. Dies kann relativ kostengünstig realisiert werden. Es kann ein relativ geringerer Zeit- und Energieaufwand für Zustandswechsel ergeben, da die Endposition bei üblichen bi-stabilen Systemen nicht direkt erkannt werden kann und daher bei konventionellen Lösungen der Aktuator mit einer Maximalzeit betrieben werden muss, um den Überhub zu erreichen

Ein Ausführungsbeispiel der Erfindung ist exemplarisch in den beigefügten schematischen Zeichnungen dargestellt. Es zeigen:
- Figur 1: ein Haushaltskältegerät,
- Figuren 2 und 3: eine schwenkbare Klappe des Haushaltskältegerätes und eine Verstellvorrichtung, welche eingerichtet ist, die Klappe zwischen zwei Stellungen hin und her zu schwenken,
- Figur 4: einen bi-stabilen Mechanismus der Verstellvorrichtung,
- Figur 5: mehrere Zustände des bi-stabilen Mechanismus, und
- Fig. 6: ein Logikschaltbild.

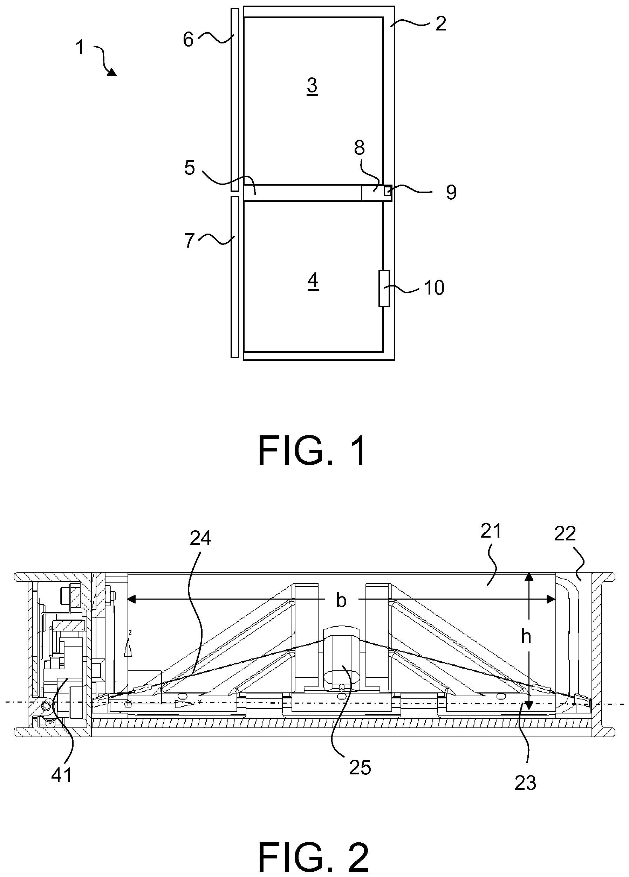

Die Fig. 1 zeigt als Beispiel eines Gerätes und insbesondere als Beispiel eines Haushaltsgerätes ein Haushaltskältegerät 1. Das Haushaltskältegerät 1 ist im Falle des vorliegenden Ausführungsbeispiels ein sogenanntes No-Frost Haushaltskältegerät. Das Haushaltskältegerät 1 ist insbesondere eine Kühl-Gefrierkombination.

Das Haushaltskältegerät 1 umfasst im Falle des vorliegenden Ausführungsbeispiels ein wärmeisoliertes Gehäuse 2 mit einem Innenbehälter, der einen kühlbaren Innenraum 3 und einen darunter angeordneten Gefrierraum 4 begrenzt. Der kühlbaren Innenraum 3 ist mittels einer wärmeisolierten Trennwand 5 vom Gefrierraum 4 getrennt. Der kühlbaren Innenraum 3 ist zum Lagern von Kühlgut vorgesehen und wird im Betrieb des Haushaltskältegerätes 1 auf Temperaturen oberhalb des Gefrierpunktes gekühlt. Der Gefrierraum 4 ist zum Lagern von Gefriergut vorgesehen und wird im Betrieb des Haushaltskältegeräts 1 auf Temperaturen unterhalb des Gefrierpunktes gekühlt.

Das Haushaltskältegerät 1 weist im Falle des vorliegenden Ausführungsbeispiels ein schwenkbares Türblatt 6 zum Verschließen des kühlbaren Innenraums 3 und ein schwenkbares Türblatt 7 zum Verschließen des Gefrierraums 3 auf. Bei geöffneten Türblättern 6, 7 sind der kühlbare Innenraum 3 und der Gefrierraum 4 zugänglich.

Das Haushaltskältegerät 1 umfasst insbesondere einen nicht näher dargestellten Kältemittelkreislauf zum Kühlen des kühlbaren Innenraums 3 und des Gefrierraums 4. Der Kältemittelkreislauf umfasst z.B. einen Verdichter, einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist. Im Falle des vorliegenden Ausführungsbeispiels ist der Verdampfer direkt mit dem Gefrierraum 4 gekoppelt oder ist an einer der in Richtung Gefrierraum 4 gerichteten Wände angeordnet.

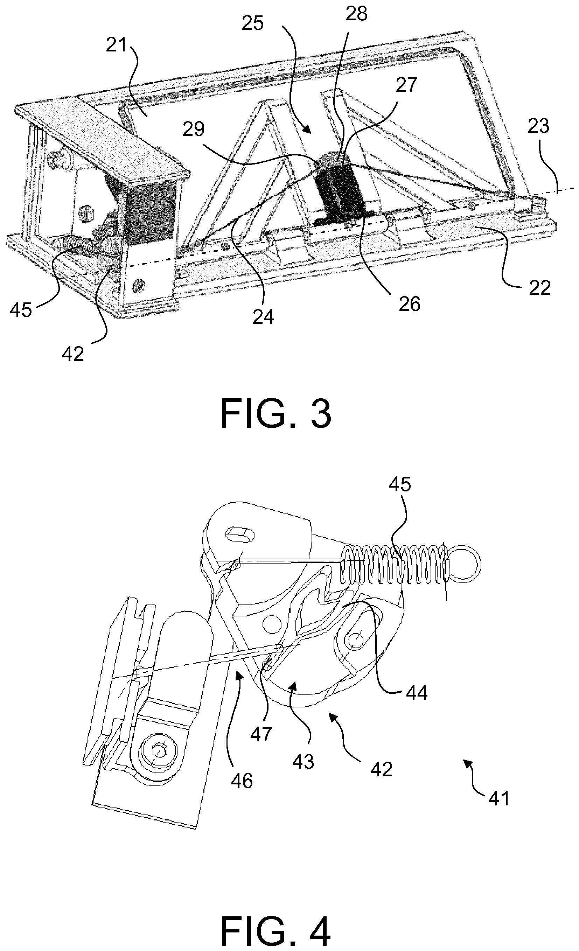

Im Falle des vorliegenden Ausführungsbeispiels ist innerhalb der Trennwand 5 eine Öffnung 8 angeordnet, welche mittels einer in den Figuren 2 und 3 gezeigten Klappe 21 verschlossen und geöffnet werden kann. Die Öffnung 8 ist insbesondere mittels eines Rahmens 22 umrandet und die Klappe 21 ist bezüglich einer Schwenkachse 23 schwenkbar gelagert und kann mittels einer Verstellvorrichtung 9 zwischen einer ersten Stellung, in der die Klappe 21 die Öffnung 8 verschließt, und einer zweiten Stellung, in der die Klappe 21 die Öffnung 8 öffnet, hin und her geschwenkt werden. Die Klappe 21 ist vorzugsweise rechteckig ausgeführt und hat insbesondere eine Breite b, welche sich in Richtung der Schwenkachse 23 erstreckt, und eine Höhe h, welche rechtwinklig zur Schwenkachse 23 ausgerichtet ist. Der Rahmen 22 stellt allgemein ein erstes Bauteil und die Klappe 21 stellt allgemein ein zweites Bauteil des als Haushaltskältegerät 1 ausgebildeten Gerätes dar, das relativ zum ersten Bauteil zwischen den beiden Stellungen hin und her bewegbar ist.

Bei geöffneter Klappe 21, d.h. wenn diese sich in ihrer zweiten Stellung befindet, kann gekühlte Luft vom Gefrierraum 4 in den kühlbaren Innenraum 3 strömen, um diesen zu kühlen.

Das Haushaltskältegerät 1 weist ferner eine Steuervorrichtung 10 auf, die z.B. einen Mikroprozessor oder Mikrokontroller umfasst und die eingerichtet ist, den Kältemittelkreislauf und die Verstellvorrichtung 9 für die Klappe 21 derart anzusteuern, dass der kühlbare Innenraum 3 und der Gefrierraum 4 zumindest annähernd eingestellte Temperatur-Soll-Werte aufweisen. Das Haushaltskältegerät 1 kann dazu nicht näher dargestellte Temperatursensoren aufweisen, welche die Ist-Temperaturen des kühlbaren Innenraums 3 und des Gefrierraums 4 messen.

Im Falle des vorliegenden Ausführungsbeispiels weist die Verstellvorrichtung 9 einen Draht 24 aus einer Formgedächtnislegierung auf. Dadurch, dass der Draht 24 aus einer Formgedächtnislegierung gefertigt ist, zieht sich dieser bei Erwärmung zusammen, d.h. verkürzt seine Länge bei Erwärmung. Kühlt der Draht 24 aus einer Formgedächtnislegierung ab, dann kann dieser wieder z.B. mittels einer vorgespannten Feder 45 in seine ursprüngliche Länge gedehnt werden. Um den Draht 24 aus einer Formgedächtnislegierung zu Erwärmen, wird dieser im Falle des vorliegenden Ausführungsbeispiels mit elektrischer Energie beaufschlagt, indem an den Draht 24 aus einer Formgedächtnislegierung z.B. eine elektrische Spannung angelegt wird oder der Draht 24 aus einer Formgedächtnislegierung mit einem elektrischen Strom beaufschlagt wird. Dazu kann das Haushaltskältegerät 1 eine nicht näher dargestellte, mittels der Steuervorrichtung 10 ansteuerbare und mit dem Draht 24 aus einer Formgedächtnislegierung verbundene Spannungsquelle umfassen.

Im Falle des vorliegenden Ausführungsbeispiels ist der Draht 24 aus einer Formgedächtnislegierung mit seinen beiden Enden beabstandet von der Schenkachse 23 am Rahmen 22 insbesondere nahe dem Bereich der Klappe 21 befestigt, welcher der Schwenkachse 23 zugewandt ist. Insbesondere sind die beiden Enden des Drahtes 24 aus einer Formgedächtnislegierung nahe derjenigen Kanten des Klappe 21 am Rahmen 22 befestigt, welche der Schwenkachse 23 zugewandt sind. Insbesondere verläuft die Verbindungslinie zwischen denjenigen Stellen, an denen die Enden am Rahmen 22 befestigt sind, parallel zur Schwenkachse 23. Insbesondere sind die Enden des Drahtes 24 aus einer Formgedächtnislegierung für ihre Befestigung mit jeweils einem nicht näher gezeigten weiteren Draht vercrimpt, die gleichzeitig auch die Anschlüsse für die Spannungsquelle sein können.

Des Weiteren ist der Draht 24 aus einer Formgedächtnislegierung an der Klappe 21 derart befestigt, dass wenn er erwärmt wird, durch sein Zusammenziehen die Klappe 21 von ihrer ersten Stellung in ihre zweite Stellung schwenkt. Dazu ist im Falle des vorliegenden Ausführungsbeispiels der Draht 24 aus einer Formgedächtnislegierung in etwa mittig bezüglich der Breite b der Klappe 21 und beabstandet von der Schwenkachse 23 an der Klappe 21 befestigt. Insbesondere ist der Draht 24 aus einer Formgedächtnislegierung in etwa auf halber Hohe h an der Klappe 21 befestigt. Dadurch weist der Draht 24 aus einer Formgedächtnislegierung eine V-Form auf.

Im Falle des vorliegenden Ausführungsbeispiels ist der Draht 24 aus einer Formgedächtnislegierung an der Klappe 21 mittels einer Befestigungsvorrichtung 25 befestigt. Die Befestigungsvorrichtung 25 ist im Falle des vorliegenden Ausführungsbeispiels zweiteilig ausgeführt und umfasst eine an der Klappe 21 befestigte Tasche 26 mit einer von der Schwenkachse 23 abgewandten Öffnung 27. Die Befestigungsvorrichtung 25 umfasst ferner ein innerhalb der Tasche 26 geführtes federvorgespanntes Element 28 mit einer Nut 29, innerhalb der der Draht 24 aus einer Formgedächtnislegierung geführt ist. Das federvorgespannte Element 28 ist derart vorgespannt, dass es den Draht 24 aus einer Formgedächtnislegierung von der Schwenkachse 23 wegdrückt. Der Bereich des federvorgespannten Elements 28, der die Nut 29 aufweist, befindet sich außerhalb der Tasche 26. Die Nut 29 ist weg von der Schwenkachse 23 geöffnet. Die Tasche 26 und das federvorgespannte Element 28 sind vorzugsweise aus Kunststoff. Die Tasche 26 ist vorzugsweise an der Klappe 21 einstückig angeformt bzw. ist vorzugsweise Teil der Klappe 21.

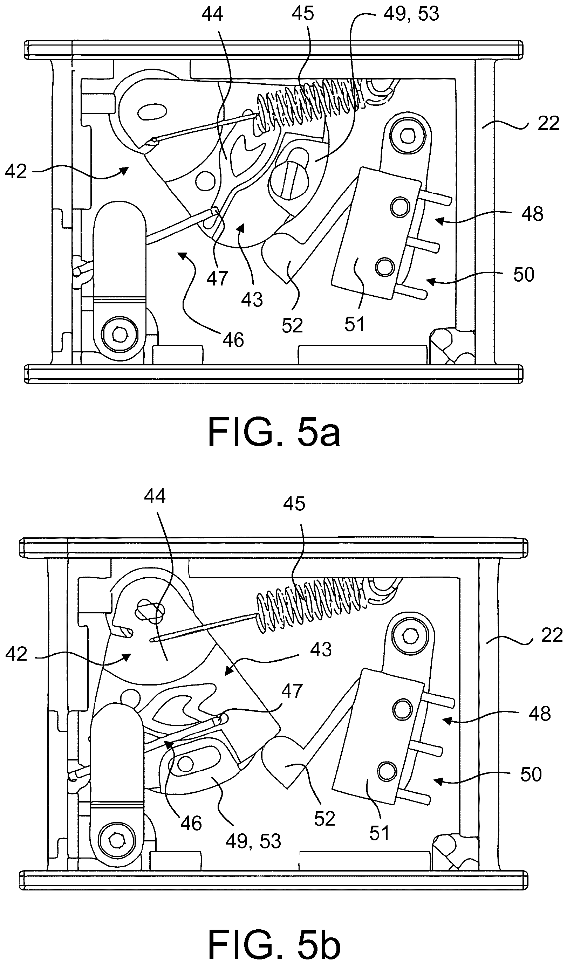

Im Falle des vorliegenden Ausführungsbeispiels umfasst die Verstellvorrichtung 9 einen in der Fig. 4 in einer perspektivischen Darstellung gezeigten bi-stabilen Mechanismus 41. Verschiedene Zustände des bi-stabilen Mechanismus 41 sind in den Figuren 5a-d gezeigt.

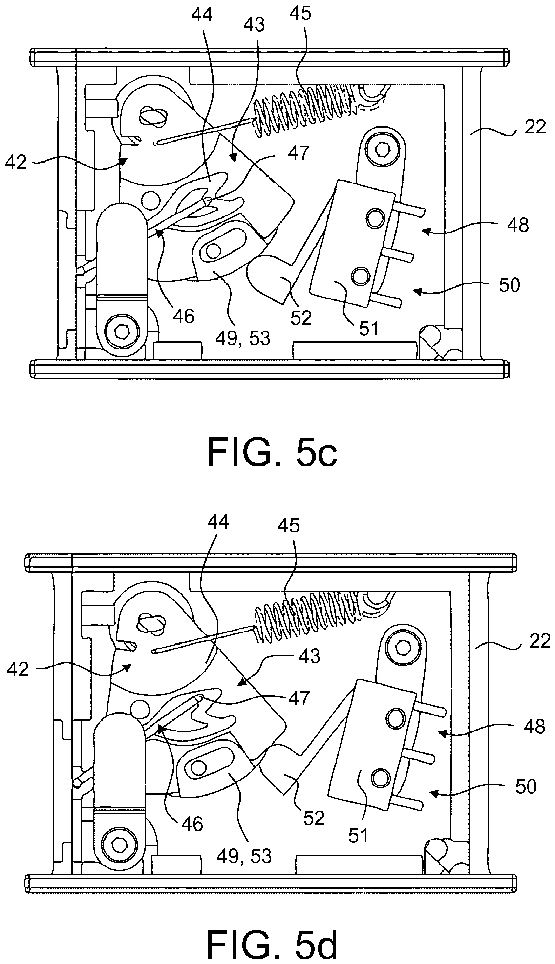

Der bi-stabile Mechanismus 41 ist mit der Klappe 21 gekoppelt und ist derart ausgeführt, dass er einen in der Fig. 5a gezeigten ersten stabilen Zustand, einen in der Fig. 5c zweiten stabilen Zustand, einen in der Fig. 5b ersten instabilen Zustand und einen in der Fig. 5d gezeigten zweiten instabilen Zustand aufweist. Der bi-stabile Mechanismus 41 ist derart mit der Klappe 21 gekoppelt, dass er in seinem ersten stabilen Zustand der Klappe 21 das Verschließen der Öffnung 8 erlaubt, sodass diese, gezogen durch die vorgespannte Feder 45 bei abgekühltem Draht 24 aus einer Formgedächtnislegierung, in ihrer ersten Stellung befindet. In seinem zweiten stabilen Zustand hält der bi-stabile Mechanismus 41 die Klappe 21 in ihrer zweiten Stellung, sodass die Klappe 21 die Öffnung 8 öffnet.

Der bi-stabile Mechanismus 41 umfasst im Falle des vorliegenden Ausführungsbeispiels ein mit der Klappe 21 fest bzw. starr gekoppeltes Bauelement 42 mit einer Oberfläche 43, die zumindest in etwa rechtwinklig zur Schwenkachse 23 ausgerichtet ist. In der Oberfläche 43 ist eine nutförmig verlaufende herzförmige Kontur 44 angeordnet. Das Bauelement 42 ist vorzugsweise fest und starr an der Klappe 21 befestigt. Es kann auch Teil der Klappe 21 sein. Dadurch, dass das Bauelement 42 starr mit der Klappe 21 verbunden ist oder gar Teil der Klappe 21 ist, schwenkt das Bauelement 42 bei einer Bewegung der Klappe 21 mit dieser mit.

Der bi-stabile Mechanismus 41 umfasst ferner die vorgespannte Feder 45, welche mit dem Bauelement 42 oder der Klappe 21 gekoppelte ist. Die vorgespannte Feder 21 weist zwei Enden auf. Die vorgespannte Feder 45 ist mit einem ihrer Enden am Bauelement 42 und mit ihrem anderen Ende am Rahmen 22 befestigt und ist derart vorgespannt, dass sie mittels des Bauelements 42 die Klappe 21 in ihre erste Stellung zu ziehen vermag. Die Feder 45 kann auch mit einem ihrer Enden direkt an der Klappe 21 und mit ihrem anderen Ende an dem Rahmen 22 befestigt sein.

Der bi-stabile Mechanismus 41 umfasst ferner eine Führung 46. Die Führung 46 ist mit einem ihrer Enden mit dem Rahmen 22 verbunden. Das andere Ende der Führung 46 ist als Stift 47 ausgeführt, welcher in der herzförmigen Kontur 44 läuft. Der herzförmigen Kontur 44 sind die beiden stabilen und die beiden instabilen Zustände zugeordnet.

Wie bereits erwähnt, schwenkt das Bauelement 42 mit dem Schwenken der Klappe 21 mit, sodass auch die herzförmige Kontur 44 bzw. das Bauelement 42 je nach Stellung der Klappe 21 unterschiedlich ausgerichtet ist und sich somit der Stift 47 relativ zur herzförmigen Kontur 44 je nach Stellung der Klappe 21 bzw. je nach Stellung des Bauelements 42 an unterschiedlichen Positionen innerhalb der herzförmigen Kontur 44 befindet. Die herzförmige Kontur 44 ist derart ausgeführt, dass sie das Schließen der Klappe 21 erlaubt, wenn sich der bi-stabile Mechanismus 41 bzw. das Bauelement 42 in seinem ersten Zustand befindet. Befindet sich der bi-stabile Mechanismus 41 bzw. das Bauelement 42 im zweiten stabilen Zustand, dann versucht zwar ebenfalls die Feder 45 die Klappe 21 in ihre erste Stellung zu ziehen. Aufgrund der herzförmigen Kontur 44 verhindert jedoch der Stift 47, wie in der Fig. 5c gezeigt, ein völliges Zurückschwenken des Bauelements 42 und somit ein Schließen der Klappe 21 bei abgekühltem Draht 24 aus einer Formgedächtnislegierung. Dadurch hält der Stift 42 das Bauelement 42 in ihren zweiten stabilen Zustand und somit die Klappe 21 in ihrer zweiten Stellung, also in ihrer geöffneten Stellung, auch ohne Erwärmung bzw. Beaufschlagen des Drahtes 24 aus einer Formgedächtnislegierung mit elektrischer Energie.

Im Falle des vorliegenden Ausführungsbeispiels ist es vorgesehen, die Zustände des bi-stabilen Mechanismus 41 bzw. die Stellung des Bauelements 42 und somit der Klappe 21 mittels eines einzigen Sensors 48 zu bestimmen bzw. zu überwachen. Der einzige Sensor 48 erzeugt ein erstes Ausgangssignal, wenn die Klappe 21 derart geschwenkt ist, dass sie ihre zweite Stellung einnimmt. Ansonsten erzeugt der Sensor 48 ein zweites Signal. Der Sensor 48 erzeugt also das zweite Signal, wenn sich die Klappe 21 in ihrer ersten Stellung befindet oder wenn die Klappe 21 über die zweite Stellung hinaus geschwenkt ist und sich somit der bi-stabile Mechanismus 41 in einem der beiden instabilen Zustände befindet. Der Sensor 48 ist insbesondere ortsfest relativ zum Rahmen 22 befestigt. Der Sensor 48 ist z.B. ein Magnetsensor oder eine Lichtschranke. Am Bauelement 42 ist z.B. eine Betätigungsvorrichtung 49 beispielsweise in Form eines Magneten oder einer Nocke angeordnet, welche somit mit dem Bauelement 42 bzw. mit der Klappe 21 mit schwenkt. Die Betätigungsvorrichtung 49 ist derart am Bauelement 42 angeordnet, dass es mit dem Sensor 48 derart zusammenwirkt, dass dieses das erste Signal erzeugt, wenn das Bauelement 42 derart geschwenkt ist, dass sich die Klappe 21 in ihrer zweiten Stellung befindet. Das Betätigungselement 49 kann z.B. derart mit dem Sensor 48 zusammen wirken, dass es den Sensor 48 einschaltet, wenn die Betätigungsvorrichtung 49 in den Wirkbereich des Sensors 48 geschwenkt ist. In diesem Fall erzeugt z.B. der Sensor als erstes Signal eine elektrische Spannung und als zweites Signal 48 keine elektrische Spannung bzw. eine elektrische Spannung von Null Volt.

Im Falle des vorliegenden Ausführungsbeispiels ist der Sensor 48 mit der Steuervorrichtung 10 verbunden, sodass diese die vom Sensor 48 stammenden Signale auszuwerten vermag und somit eine Information über den aktuellen Zustand des bi-stabilen Mechanismus 42 und somit über die Stellung der Klappe 21 erhält.

Im Falle des vorliegenden Ausführungsbeispiels wird als einziger Sensor 48 ein einziger mechanischer Schalter 50, der insbesondere als ein Mikroschalter ausgebildet ist, verwendet. Der Schalter 50 umfasst insbesondere ein Gehäuse 51, innerhalb dem die elektrischen Kontakte des Schalters 50 angeordnet sind, und ein Betätigungselement 52, welches beim Betätigen die Kontakte des Schalters 50 kurz schließt, um den Schalter 50 zu schließen. Wird das Betätigungselement 52 nicht betätigt, so öffnet es automatisch die Kontakte, um den Schalter 50 zu öffnen.

Bei geschlossenem Schalter 50 erhält die Steuervorrichtung 10 ein erstes Signal in Form einer elektrischen Spannung ungleich Null Volt und bei geöffnetem Schalter 50 erhält die Steuervorrichtung 10 ein zweites Signal in Form einer elektrischen Spannung von Null Volt.

Der Schalter 50 ist insbesondere mittels seines Gehäuses 51 am Rahmen 22 befestigt.

Im Falle des vorliegenden Ausführungsbeispiels weist das Bauelement 42 einen Nocken 53 als Betätigungsvorrichtung 49 auf. Der Nocken 53 ist derart am Bauelement 42 abgeordnet, dass er das Betätigungselement 52 des Schalters 50 aktiviert und somit den Schalter 50 schließt, wenn das Bauelement 42 derart geschwenkt ist, dass sich die Klappe 21 in ihrer zweiten Stellung befindet. Ansonsten aktiviert der Nocken 53 jedoch nicht das Betätigungselement 52 des Schalters 50, sodass der Schalter 50 geöffnet ist, wenn sich die Klappe 21 in ihrer ersten Stellung befindet oder über die zweite Stellung hinaus geschwenkt ist.

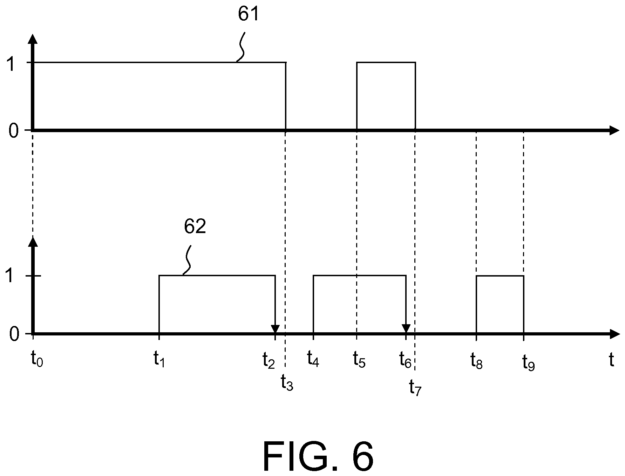

Die Figuren 5a-d veranschaulichen die Wirkungsweise des bi-stabilen Mechanismus 41. Die Fig. 6 zeigt den zeitlichen Verlauf 61, des durch den Draht 24 aus einer Formgedächtnislegierung fließenden elektrischen Stroms bzw. des Zustands der mit dem Draht 24 aus einer Formgedächtnislegierung verbundenen elektrischen Spannungsquelle, und den entsprechenden zeitlichen Verlauf 62, der den zeitlichen Zustand des Sensors 48 bzw. des Schalters 50 darstellt. Ist die Spannungsquelle eingeschaltet, so fließt elektrischer Strom durch den Draht 24 aus einer Formgedächtnislegierung, ansonsten nicht. Weist der Verlauf 61 den logischen Wert "1" auf, so fließt Strom, bei, logischen Wert "0" fließt kein Strom. Weist der Verlauf 62 den logischen Wert "1", so ist der Schalter 50 geschlossen, beim logischen Wert "0" dagegen offen.

Verschließt die Klappe 21 die Öffnung 8, so befindet sie sich in ihrer ersten Stellung, in der der Draht 24 aus einer Formgedächtnislegierung abgekühlt ist und somit mittels der vorgespannten Feder 45 insbesondere in ihre maximale Länge gezogen werden kann. In der ersten Stellung befindet sich der bi-stabile Mechanismus 41 in seinem ersten stabilen Zustand, wodurch der Stift 47 derart mit der herzförmigen Kontur 44 des Bauelements 42 zusammenwirkt, dass es der Klappe 21 das Verschließen der Öffnung 8 erlaubt bzw. der Klappe 21 erlaubt, mittels der vorgespannten Feder 45 ihre erste Stellung einzunehmen.

Der Nocken 53 aktiviert nicht das Betätigungselement 52 des Schalters 50, sodass der Schalter 50 geöffnet ist und auch kein Strom durch den Draht 24 aus einer Formgedächtnislegierung fließt, die elektrische Spannungsquell also ausgeschaltet ist.

Zum Zeitpunkt t₀ soll die Klappe 21 geöffnet werden, damit durch die Öffnung 8 gekühlte Luft vom Gefrierraum 4 in den kühlbaren Innenraum 3 zu strömen vermag. Deshalb wird der Draht 24 aus einer Formgedächtnislegierung erwärmt, indem im Falle des vorliegenden Ausführungsbeispiels die Steuervorrichtung 10 die mit dem Draht 24 aus einer Formgedächtnislegierung verbundene Spannungsquelle einschaltet, um den Draht 24 aus einer Formgedächtnislegierung mit elektrischer Energie zu beaufschlagen. Dadurch zieht sich der der Draht 24 aus einer Formgedächtnislegierung zusammen und schwenkt dadurch die Klappe 21 bezüglich der Schwenkachse 21, wodurch die Klappe 21 die Öffnung 8 öffnet. Während des Schwenkens der Klappe 21 schwenkt auch das Bauelement 42, wodurch der Stift 47 relativ zur herzförmigen Kontur 44 solange seine Position ändert, bis der bi-stabile Mechanismus zum Zeitpunkt t₂ den in der Fig. 5b veranschaulichten ersten instabilen Zustand erreicht. Der Draht 24 aus einen Formgedächtnislegierung stellt somit einen Aktuator dar, der gesteuert durch die Steuervorrichtung 10 die Klappe 21 von ihrer ersten Stellung in ihre zweite Stellung und darüber hinaus zu schwenken vermag.

Während des Schwenkens der Klappe 21 erreicht diese zum Zeitpunkt t₁ ihre zweite Stellung, wodurch der Nocken 53 den Schalter 50 schließt. Aufgrund des bi-stabilen Mechanismus 41 schwenkt die Klappe 21 jedoch über ihre zweite Stellung solange hinaus, bis de bi-stabile Mechanismus 41 zum Zeitpunkt t₂ den ersten instabilen Zustand erreicht, wodurch der Nocken 53 nicht mehr den Schalter 50 schließt und dieser somit öffnet. Diese Änderung des Schaltzustands des Schalters 50 erkennt die Steuervorrichtung 10 und schaltet zu diesem Zeitpunkt t₂ oder zu einem Zeitpunkt t₃ kurz danach die elektrische Spannungsquelle ab, wodurch der Draht 24 aus einer Formgedächtnislegierung anfängt, abzukühlen und dadurch mittels der vorgespannten Feder 45 wieder in seine ursprüngliche Länge gedehnt werden kann. Dadurch wird es der vorgespannten Feder 45 ermöglicht, die Klappe 21 wieder derart zu schwenken, dass diese versucht, die Öffnung 8 wieder zu verschließen. Aufgrund der herzförmigen Kontur 44 wird jedoch der Stift 47 in eine Position innerhalb der herzförmigen Kontur 44 geführt, in der der bi-stabile Mechanismus 41 bzw. das Bauelement 42 zum Zeitpunkt t₄ seinen zweiten stabilen Zustand erreicht. Dies ist in der Fig. 5c gezeigt. Im zweiten stabilen Zustand verhindert jedoch der Stift 47, dass das Bauelement 42 soweit zurück schwenkt, dass die Klappe 21 die Öffnung 8 verschließt, wodurch die Klappe 21 in ihrer zweiten Stellung gehalten wird ohne dass es nötig ist, den Draht 24 aus einer Formgedächtnislegierung zu erwärmen. Dadurch öffnet der Nocken 53 den Schalter 50.

Zum Zeitpunkt t₅ soll die Klappe 21 wieder geschlossen werden. Deshalb schaltet die Steuervorrichtung 10 zum Zeitpunkt t₅ wieder die Spannungsquelle ein, wodurch sich der Draht 24 aus einer Formgedächtnislegierung zusammenzieht und dadurch die Klappe 21 solange weiter schwenkend öffnet, bis der bi-stabile Mechanismus zum Zeitpunkt t₆ den in der Fig. 5d gezeigten zweiten instabilen Zustand erreicht. Im zweiten instabilen Zustand wirkt der Nocken 53 nicht mehr mit dem Betätigungselement 52 des Schalters 50 zusammen, sodass zum Zeitpunkt t₆ der Schalter 50 öffnet. Diese Änderung des Schaltzustands des Schalters 50 erkennt die Steuervorrichtung 10 und schaltet zu diesem Zeitpunkt t₆ oder zu einem Zeitpunkt t₇ kurz danach die elektrische Spannungsquelle ab, wodurch der Draht 24 aus einer Formgedächtnislegierung anfängt, abzukühlen und dadurch mittels der vorgespannten Feder 45 wieder in seine ursprüngliche Länge gedehnt werden kann. Dadurch wird es der vorgespannten Feder 45 ermöglicht, die Klappe 21 derart zu schwenken, dass sie die Öffnung 8 verschließen kann. Aufgrund der herzförmigen Kontur 44 erlaubt der Stift 47 nun ein Schwenken des Bauelements 42 derart, dass der bi-stabile Mechanismus 41 wieder seinen ersten stabilen Zustand einzunehmen vermag, wodurch es auch der Klappe 21 ermöglicht wird, ihre erste Stellung einzunehmen, um die Öffnung 8 zu verschließen. Während des Schwenkens der Klappe 21 in ihre erste Stellung nimmt diese zwischen den Zeiten t₈ und t₉ die zweite Stellung ein, weshalb in diem Zeitraum der Nocken 53 den Schalter 50 schließt. Dadurch wird es der Steuervorrichtung 10 ermöglicht zu erkennen, dass die Klappe 21 wieder zuverlässig ihre erste Stellung eingenommen hat.

### BEZUGSZEICHENLISTE

- 1: Haushaltskältegerät
- 2: wärmeisoliertes Gehäuse
- 3: kühlbarer Innenraum
- 4: Gefrierraum
- 5: Trennwand
- 6: Türblatt
- 7: Türblatt
- 8: Öffnung
- 9: Verstellvorrichtung
- 10: Steuervorrichtung
- 21: Klappe
- 22: Rahmen
- 23: Schwenkachse
- 24: Draht
- 25: Befestigungsvorrichtung
- 26: Tasche
- 27: Öffnung
- 28: federvorgespanntes Element
- 29: Nut
- 41: bi-stabilen Mechanismus
- 42: Bauelement
- 43: Oberfläche
- 44: herzförmige Kontur
- 45: vorgespannte Feder
- 46: Führung
- 47: Stift
- 48: Sensor
- 49: Betätigungsvorrichtung
- 50: Schalter
- 51: Gehäuse
- 52: Betätigungselement
- 53: Nocken
- 61,62: Verlauf

- b: Breite
- h: Höhe

## Patentansprüche

1. Gerät, insbesondere Haushaltsgerät, aufweisend eine Steuervorrichtung (10), ein erstes Bauteil (22), ein relativ zum ersten Bauteil (22) bewegliches zweites Bauteil (21) und eine mit der Steuervorrichtung (10) verbundene, zum Hin- und Herbewegen des zweiten Bauteils (21) relativ zum ersten Bauteil (22) zwischen einer ersten Stellung und einer zweiten Stellungen vorgesehene und mit der Steuervorrichtung (10) verbundene Verstellvorrichtung (9), die einen Aktuator (24) und einen mit dem zweiten Bauteil (21) gekoppelten bi-stabilen Mechanismus (41) aufweist, wobei der Aktuator (24) eingerichtet ist, gesteuert durch die Steuervorrichtung (10) das zweite Bauteil (21) relativ zum ersten Bauteil (22) von der ersten Stellung in die zweite Stellung und über die zweite Stellung hinaus zu bewegen, und der bi-stabile Mechanismus (41) eine vorgespannte Feder (45) aufweist, die das zweite Bauteil (21) in seine erste Stellung zu bewegen vermag, und der bi-stabile Mechanismus (41) einen ersten stabilen Zustand, einen zweiten stabilen Zustand, einen ersten instabilen Zustand und einen zweiten instabilen Zustand aufweist, wobei der erste stabile Zustand der ersten Stellung und der zweite stabile Zustand der zweiten Stellung des zweiten Bauteils (21) zugeordnet ist, sodass der bi-stabile Mechanismus (41) in seinem ersten stabilen Zustand das zweite Bauteil (21) in seiner ersten Stellung und in seinem zweiten stabilen Zustand in seiner zweiten Stellung hält, und die vorgespannte Feder (45) im ersten instabilen Zustand den bi-stabilen Mechanismus (41) in seinen zweiten stabilen Zustand und im zweiten instabilen Zustand in seinen ersten stabilen Zustand zu bewegen vermag, wobei der Aktuator (24) das zweite Bauteil (21) von seiner ersten Stellung derart weit über die zweiten Stellung zu bewegen vermag, dass der bi-stabile Mechanismus den ersten instabilen Zustand erreicht, der Aktuator das zweite Bauteil von seiner zweiten Stellung derart weit über die zweite Stellung zu bewegen vermag, dass der bi-stabile Mechanismus den zweiten instabilen Zustand erreicht, **dadurch gekennzeichnet, dass** ein mit dem bi-stabilen Mechanismus (41) gekoppelter und mit der Steuervorrichtung (10) verbundener Sensor (48) vorgesehen ist, welcher ein erstes Signal erzeugt, wenn das zweite Bauteil (21) seine zweite Stellung einnimmt und ansonsten ein zweites Signal erzeugt, und die Steuervorrichtung (10) derart ausgeführt ist, dass sie
- den Aktuator (24) so lange ansteuert, bis der Sensor (48) zunächst das erste Signal erzeugt und anschließend anfängt, das zweite Signal zu erzeugen, damit der Aktuator (24) das zweite Bauteil (21) von seiner ersten Stellung bis über die zweite Stellung hinaus so weit bewegt, dass der bi-stabile Mechanismus seinen ersten instabilen Zustand erreicht, und
- nachdem der Sensor (48) beginnt, das zweite Signale zu erzeugen, den Aktuator (24) ausschaltet, sodass die vorgespannte Feder (45) das zweite Bauteil (24) in seine zweite Stellung bewegt.

2. Gerät nach Anspruch 1, **gekennzeichnet durch** eine Öffnung (8), welche mittels des zweiten Bauteils (21) verschlossen ist, wenn sich das zweite Bauteil (21) in seiner ersten Stellung befindet, und welche geöffnet ist, wenn sich das Bauteil (21) in seiner zweiten Stellung befindet.

3. Gerät nach Anspruch 1 oder 2, **dadurch gekennzeichnet, dass** die Steuervorrichtung (10) derart ausgeführt ist, dass sie nach dem Ausschalten des Aktuators (24) darauf schließt, dass der bi-stabile Mechanismus (41) seinen zweiten stabilen Zustand und somit das zweite Bauteil (21) seine zweite Stellung eingenommen hat, wenn der Sensor (24) wieder das erste Signal erzeugt.

4. Gerät nach einem der Ansprüche 1 bis 3, **dadurch gekennzeichnet, dass** die Steuervorrichtung (10) derart ausgeführt ist, dass sie
- den Aktuator (24) so lange ansteuert, bis der Sensor (48) beginnt, das zweite Signal zu erzeugen, damit der Aktuator (24) das zweite Bauteil (24) von der zweiten Stellung über diese hinaus bewegt, und
- nachdem der Sensor (48) beginnt, das zweite Signale zu erzeugen, den Aktuator (24) ausschaltet, sodass die vorgespannte Feder (45) das zweite Bauteil (24) in seine erste Stellung bewegt.

5. Gerät nach Anspruch 4, **dadurch gekennzeichnet, dass** die Steuervorrichtung (10) derart ausgeführt ist, dass sie nach dem Ausschalten des Aktuators (24) darauf schließt, dass der bi-stabile Mechanismus (41) seinen ersten stabilen Zustand und somit das zweite Bauteil (21) seine erste Stellung eingenommen hat, wenn der Sensor (24) nach dem Ausschalten des Aktuators (24) und während des Bergens das erste Signal und anschließend das zweite Signal erzeugt.

6. Gerät nach einem der Ansprüche 1 bis 5, **dadurch gekennzeichnet, dass** das zweite Bauteil als Klappe (21) ausgebildet ist, welche mittels der Verstellvorrichtung (9) zwischen den beiden Stellungen bezüglich einer Schwenkachse (23) schwenkbar ist.

7. Gerät nach Anspruch 6, **dadurch gekennzeichnet, dass** der bi-stabile Mechanismus (41) folgende Bestandteile umfasst:
- die vorgespannte Feder (45), die derart vorgespannt ist, dass sie die Klappe (21) in ihre erste Stellung zu schwenken vermag,
- ein Bauelement (42) mit einer Oberfläche (43), die zumindest in etwa rechtwinklig zur Schwenkachse (23) ausgerichtet und in der eine nutförmig verlaufende herzförmige Kontur (44) angeordnet ist, wobei das Bauelement (42) Teil der Klappe (21) oder mit dieser starr verbunden ist und somit das Bauelement (42) und die herzförmige Kontur (44) mit der Klappe (21) mit schwenkt und der herzförmigen Kontur (44) die beiden stabilen Zustände und die beiden instabilen Zustände zugeordnet sind, wobei das Bauelement (42) eine Betätigungsvorrichtung (49) aufweist, welche mit der Klappe (21) mit schwenkt und den Sensor (48) nur dann aktiviert, wenn die Klappe (21) in ihrer zweiten Stellung geschwenkt ist, und
- ein in der herzförmigen Kontur (44) eingreifender Stift (47), der derart mit der herzförmigen Kontur (44) zusammenwirkt, sodass der Stift (47) die Klappe (21) in ihrer ersten Stellung hält, wenn der bi-stabile Mechanismus (41) seinen ersten stabilen Zustand aufweist, und die Klappe (21) in ihrer zweiten Stellung hält, wenn der bi-stabile Mechanismus (41) seinen zweiten stabilen Zustand aufweist.

8. Gerät nach Anspruch 7, **dadurch gekennzeichnet, dass** der Sensor (48) als ein mechanischer Schalter (50) mit einem Betätigungselement (52) ausgebildet ist und die Betätigungsvorrichtung (49) als eine an dem Bauelement (42) angeordnete Ausbuchtung ist, welche das Betätigungselement (52) schließt, um den Schalter (50) zu schließen, wenn die Klappe (21) in ihrer zweiten Stellung geschwenkt ist.

9. Verfahren zum Betreiben eines Gerätes nach einem der Ansprüche 1 bis 8, aufweisend folgende Verfahrensschritte:
- Bewegen des zweiten Bauteils mittels des Aktuators (24) von seiner ersten Stellung bis über die zweite Stellung hinaus so lange, bis der Sensor (48) zunächst das erste Signal erzeugt und anschließend anfängt, das zweite Signal zu erzeugen, und
- nachdem der Sensor (48) beginnt, das zweite Signal zu erzeugen, Ausschalten des Aktuators (24) und mittels der vorgespannten Feder (45), Bewegen des zweiten Bauteils (24) in seine zweite Stellung.

10. Verfahren nach Anspruch 9, aufweisend, nachdem der Aktuator (24) ausgeschaltet wurde, Schließen darauf, dass der bi-stabile Mechanismus (41) seinen zweiten stabilen Zustand und somit das zweite Bauteil (21) seine zweite Stellung eingenommen hat, wenn der Sensor (24) wieder das zweite Signal erzeugt.

11. Verfahren nach Anspruch 9 oder 10, aufweisend folgende Verfahrensschritte:
- Bewegen des zweiten Bauteils (24) mittels des Aktuators (24) von der zweiten Stellung über diese hinaus, bis der Sensor (48) beginnt, das zweite Signal zu erzeugen, und
- nachdem der Sensor (48) beginnt, das zweite Signal zu erzeugen, Ausschalten des Aktuators (24) und mittels der vorgespannten Feder (45), Bewegen des zweiten Bauteils (24) in seine erste Stellung.

12. Verfahren nach Anspruch 11, aufweisend, nachdem der Aktuator (24) ausgeschaltet wurde, Schließen darauf, dass der bi-stabile Mechanismus (41) seinen ersten stabilen Zustand und somit das zweite Bauteil (21) seine erste Stellung eingenommen hat, wenn der Sensor (24) nach dem Ausschalten des Aktuators (24) und während des Bewegens das erste Signale und anschließend das zweite Signal erzeugt.

## Claims

1. Appliance, especially a household appliance having a control facility (10), a first component (22), a second component (21) able to be moved relative to the first component (22) and an adjustment facility (9) connected to the control facility (10) provided for to and fro movement of the second component (21) relative to the first component (22) between a first position and a second position, which adjustment facility (9) has an actuator (24) and a bistable mechanism (41) coupled to the second component (21), wherein the actuator (24) is configured, controlled by the control facility (10) to move the second component (21) relative to the first component (22) from the first position into the second position and beyond said second position, and the bistable mechanism (41) has a pre-tensioned spring (45), which is capable of moving the second component (21) into its first position, and the bistable mechanism (41) has a first stable state, a second stable state, a first unstable state and a second unstable state, wherein the first stable state is assigned to the first position and the second stable state is assigned to the second position of the second component (21), so that the bistable mechanism (41), in its first stable state, holds the second component (21) in its first position and in its second stable state holds it in its second position, and the pre-tensioned spring (45), in the first unstable state, is capable of moving the bistable mechanism (41) into its second stable state and in the second unstable state is capable of moving it into its first stable state, wherein the actuator (24) is capable of moving the second component (21) from its first position to beyond the second position to such an extent that the bistable mechanism reaches the first unstable state, the actuator is capable of moving the second component from its second position to beyond the second position to such an extent that the bistable mechanism reaches the second unstable state, **characterised in that** a sensor (48) coupled with the bistable mechanism (41) and with the control facility (10) is provided, which generates a first signal when the second component (21) assumes its second position and otherwise generates a second signal and the control facility (10) is designed so that it
- activates the actuator (24) until the sensor (48) initially generates the first signal and subsequently begins to generate the second signal, so that the actuator (24) moves the second component (21) from its first position to beyond the second position to such an extent that the bistable mechanism reaches its first unstable state, and
- after the sensor (48) begins to generate the second signal, switches off the actuator (24) so that the pretensioned spring (45) moves the second component (24) into its second position.

2. Appliance according to claim 1, **characterised by** an opening (8) which is closed off by means of the second component (21) when the second component (21) is in its first position, and which is opened when the component (21) is in its second position.

3. Appliance according to 1 or 2, **characterised in that** the control facility (10) is embodied such that, after the switching off of the actuator (24), it concludes that the bistable mechanism (41) has assumed its second stable state and thus that the second component (21) has assumed its second position when the sensor (24) generates the first signal again.

4. Appliance according to one of claims 1 to 3, **characterised in that** the control facility (10) is designed so that it
- activates the actuator (24) until the sensor (48) begins to generate the second signal, so that the actuator (24) moves the second component (24) from the second position beyond this position, and
- after the sensor (48) begins to generate the second signals, switches off the actuator (24) so that the pretensioned spring (45) moves the second component (24) into its first position.

5. Appliance according to claim 4, **characterised in that** the control facility (10) is embodied such that it concludes after the actuator (24) has been switched off that the bistable mechanism (41) has assumed its first stable state and thus the second component (21) has assumed its first position if the sensor (24) after the switching off of the actuator (24) and during the hiding generates the first signal and subsequently the second signal.

6. Appliance according to one of claims 1 to 5, **characterised in that** the second component is embodied as a flap (21) which is able to be pivoted by means of the adjustment facility (9) between the two positions of a pivot axis (23).

7. Appliance according to claim 6, **characterised in that** the bistable mechanism (41) comprises the following elements:
- the pre-tensioned spring (45), which is pre-tensioned such that the flap (21) is capable of pivoting into its first position,
- a component (42) with a surface (43), which is at least aligned approximately at right angles to the pivot axis (23) and in which a heart-shaped contour (44) running in the form of a groove is disposed, wherein the component (42) is a part of the flap (21) or is rigidly connected to this and thus the component (42) and the heart-shaped contour (44) pivots along with the flap (21) and the heart-shaped contour (44) is assigned the two stable states and the two unstable states, wherein the component (42) has an actuation facility (49), which pivots along with the flap (21) and only activates the sensor (48) if the flap (21) is pivoted into its second position, and
- a pin (47) engaging in the heart-shaped contour (44), which interacts with the heart-shaped contour (44) such that the pin (47) holds the flap (21) in its first position, when the bistable mechanism (41) is in its first stable state, and holds the flap (21) in its second position when the bistable mechanism (41) is in its second stable state.

8. Appliance according to claim 7, **characterised in that** the sensor (48) is embodied as a mechanical switch (50) with an actuation element (52) and the actuation facility (49) as a protrusion disposed on the component (42), which closes the actuation element (52) in order to close the switch (50), when the flap (21) is pivoted into its second position.

9. Method for operating an appliance according to one of claims 1 to 8, having the following method steps:
- moving the second component by means of the actuator (24) from its first position to beyond the second position until the sensor (48) initially generates the first signal and subsequently begins to generate the second signal, and
- after the sensor (48) begins to generate the second signal, switching off the actuator (24) and moving the second component (24) into its second position by means of the pretensioned spring (45).

10. Method according to claim 9, featuring, after the actuator (24) has been switched off, concluding that the bistable mechanism (41) has assumed its second stable state and thus the second component (21) has assumed its second position, when the sensor (24) generates the second signal again.

11. Method according to claim 9 or 10, having the following method steps:
- moving the second component (24) by means of the actuator (24) from the second position beyond this position until the sensor (48) begins to generate the second signal, and
- after the sensor (48) begins to generate the second signal, switching off the actuator (24) and, by means of the pretensioned spring (45), moving the second component (24) into its first position.

12. Method according to claim 11, featuring, after the actuator (24) has been switched off, concluding that the bistable mechanism (41) has assumed its first stable state and thus the second component (21) has assumed its first position, when the sensor (24) after the switching off of the actuator (24) and during the movement generates the first signal and subsequently the second signal.

## Revendications

1. Appareil, en particulier appareil ménager, présentant un dispositif de commande (10), un premier composant (22), un deuxième composant (21) mobile par rapport au premier composant (22) et un dispositif de réglage (9) - relié au dispositif de commande (10) et prévu pour déplacer le deuxième composant (21) d'avant en arrière par rapport au premier composant (22) entre une première position et une deuxième position et relié au dispositif de commande (10) -, qui présente un actionneur (24) et un mécanisme (41) bistable couplé au deuxième composant (21), l'actionneur (24) étant placé, commandé par le dispositif de commande (10) pour déplacer le deuxième composant (21) par rapport au premier composant (22) de la première position dans la deuxième position et au-delà de la deuxième position, et le mécanisme (41) bistable présentant un ressort (45) précontraint qui arrive à déplacer le deuxième composant (21) dans sa première position, et le mécanisme (41) bistable présentant un premier état stable, un deuxième état stable, un premier état instable et un deuxième état instable, le premier état stable étant associé à la première position et le deuxième état stable l'étant à la deuxième position du deuxième composant, de sorte que le mécanisme (41) bistable garde le deuxième composant (21), dans son premier état stable, dans sa première position et, dans son deuxième état stable, dans sa deuxième position, et le ressort (45) précontraint dans le premier état instable arrive à déplacer le mécanisme (41) bistable dans son deuxième état stable et, dans le deuxième état instable, dans son premier état stable, l'actionneur (24) arrive à déplacer le deuxième composant (21) de sa première position loin de la deuxième position de sorte que le mécanisme bistable atteint le premier état instable, l'actionneur arrive à déplacer le deuxième composant de sa deuxième position loin de la deuxième position de sorte que le mécanisme bistable atteint le deuxième état instable,
**caractérisé en ce qu'**un détecteur (48) couplé au mécanisme (41) bistable et relié au dispositif de commande (10) est prévu, lequel produit un premier signal quand le deuxième composant (21) prend sa deuxième position et sinon, produit un deuxième signal, et le dispositif de commande (10) est réalisé de façon qu'il
- amorce l'actionneur (24) jusqu'à ce que le détecteur (48) produise d'abord le premier signal et ensuite commence à produire le deuxième signal, pour que l'actionneur (24) déplace le deuxième composant (21) de sa première position jusque plus loin que la deuxième position de façon que le mécanisme bistable atteigne son premier état instable et
- après que le détecteur (48) a commencé à produire le deuxième signal, l'actionneur (24) s'éteint de sorte que le ressort (45) précontraint déplace le deuxième composant (24) dans sa deuxième position.

2. Appareil selon la revendication 1, **caractérisé par** une ouverture (8), laquelle est fermée au moyen du deuxième composant (21) quand le deuxième composant (21) se trouve dans sa première position et qui est ouverte quand le composant (21) est dans sa deuxième position.

3. Appareil selon la revendication 1 ou 2, **caractérisé en ce que** le dispositif de commande (10) est réalisé de façon qu'il établit, après la coupure de l'actionneur (24) que le mécanisme (41) bistable a pris son deuxième état stable et ainsi que le deuxième composant (21) a pris sa deuxième position, quand le détecteur (24) produit à nouveau le premier signal.

4. Appareil selon l'une des revendications 1 à 3, **caractérisé en ce que** le dispositif de commande (10) est réalisé de sorte qu'il
- amorce l'actionneur (24) jusqu'à ce que le détecteur (48) commence à produire le deuxième signal, pour que l'actionneur (24) déplace le deuxième composant (24) de la deuxième position jusque plus loin que celle-ci, et
- après que le détecteur (48) a commencé à produire le deuxième signal, l'actionneur (24) s'éteint de sorte que le ressort (45) précontraint déplace le deuxième composant (24) dans sa première position.

5. Appareil selon la revendication 4, **caractérisé en ce que** le dispositif de commande (10) est réalisé de façon qu'après la coupure de l'actionneur (24) il établit que le mécanisme (41) bistable a pris son premier état stable et ainsi que le deuxième composant (21) a pris sa première position, quand le détecteur (24), après la coupure de l'actionneur (24) et pendant la récupération, produit le premier signal et ensuite le deuxième signal.

6. Appareil selon l'une des revendications 1 à 5, **caractérisé en ce que** le deuxième composant est exécuté sous forme de clapet (21), lequel peut pivoter, au moyen du dispositif de réglage (9) entre les deux positions par rapport à un axe de pivotement (23).

7. Appareil selon la revendication 6, **caractérisé en ce que** le mécanisme (41) bistable comprend les constituants suivants:
- le ressort (45) précontraint, précontraint de façon qu'il arrive à faire pivoter le clapet (21) dans sa première position,
- un module (42) avec une surface (43) orientée au moins à peu près à la perpendiculaire à l'axe de pivotement (23) et, dans laquelle est agencée un contour (44) en coeur en rainure, le module (42) faisant partie du clapet (21) ou étant relié à celui-ci de façon rigide, et ainsi le module (42) et le contour en coeur (44) pivote avec le clapet (21) et les deux états stables et les deux états instables étant associés au contour en coeur (44), le module (42) présentant un dispositif d'actionnement (49), qui pivote avec le clapet (21) et qui active le détecteur (48) seulement quand le clapet (21) a pivoté dans sa deuxième position, et
- une broche (47) prenant dans le contour en coeur (44) qui collabore avec le contour en coeur (44) de sorte que la broche (47) maintient le clapet (21) dans sa première position, quand le mécanisme (41) bistable présente son premier état stable, et maintient le clapet (21) dans sa deuxième position quand le mécanisme (41) stable présente son deuxième état stable.

8. Appareil selon la revendication 7, **caractérisé en ce que** le détecteur (48) est réalisé sous forme de commutateur (50) mécanique avec un élément d'actionnement (52) et le dispositif d'actionnement (49) est comme une échancrure agencée au module (42), laquelle ferme l'élément d'actionnement (52), pour fermer le commutateur (50) quand le clapet (21) pivote dans sa deuxième position.

9. Procédé de fonctionnement d'un appareil selon l'une des revendications 1 à 8 présentant les étapes de procédé suivantes:
- déplacement du deuxième composant au moyen de l'actionneur (24) de sa première position jusque plus loin que la deuxième position jusqu'à ce que le détecteur (48) produise d'abord le premier signal et ensuite commence à produire le deuxième signal, et
- après que le détecteur (48) a commencé à produire le deuxième signal, coupure de l'actionneur (24) et, au moyen du ressort (45) précontraint, déplacement du deuxième composant (24) dans sa deuxième position.

10. Procédé selon la revendication 9 établissant, après la coupure de l'actionneur (24), que le mécanisme (41) bistable a pris son deuxième état stable et ainsi que le deuxième composant (21) a pris sa deuxième position, quand le détecteur (24) produit à nouveau le deuxième signal.

11. Procédé selon la revendication 9 ou 10, présentant les étapes de procédé suivantes:
- déplacement du deuxième composant (24) au moyen de l'actionneur (24) de la deuxième position au-delà de celle-ci jusqu'à ce que le détecteur (48) commence à produire le deuxième signal, et
- après que le détecteur (48) a commencé à produire le deuxième signal, coupure de l'actionneur (24) et, au moyen du ressort (45) précontraint, déplacement du deuxième composant (24) dans sa première position.

12. Procédé selon la revendication 11 établissant, après la coupure de l'actionneur (24), que le mécanisme (41) bistable a pris son premier état stable et ainsi que le deuxième composant (21) a pris sa première position, quand le détecteur (24) produit à nouveau le premier signal et ensuite le deuxième signal, après la coupure de l'actionneur (24) et pendant le déplacement.
